(19) Europäisches Patentamt / European Patent Office / Office européen des brevets

(11) **EP 3 552 279 B1**

(12) **EUROPÄISCHE PATENTSCHRIFT**

(45) Veröffentlichungstag und Bekanntmachung des Hinweises auf die Patenterteilung:
**12.06.2024 Patentblatt 2024/24**

(21) Anmeldenummer: **17832929.8**

(22) Anmeldetag: **12.12.2017**

(51) Internationale Patentklassifikation (IPC):
**H01S 3/23** $^{(2006.01)}$     **H01S 3/00** $^{(2006.01)}$
**H01S 3/067** $^{(2006.01)}$

(52) Gemeinsame Patentklassifikation (CPC):
**H01S 3/0057;** H01S 3/06754; H01S 3/2308

(86) Internationale Anmeldenummer:
**PCT/EP2017/082412**

(87) Internationale Veröffentlichungsnummer:
**WO 2018/108900 (21.06.2018 Gazette 2018/25)**

(54) **ERZEUGUNG VON LASERPULSEN IN EINEM BURSTBETRIEB**

GENERATING LASER PULSES IN A BURST MODE

GÉNÉRATION D'IMPULSIONS LASER PAR TRANSMISSION EN MODE RAFALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2016 DE 102016124087**

(43) Veröffentlichungstag der Anmeldung:
**16.10.2019 Patentblatt 2019/42**

(73) Patentinhaber: **Active Fiber Systems GmbH**
**07745 Jena (DE)**

(72) Erfinder:
• **EIDAM, Tino**
**07751 Jena (DE)**
• **LIMPERT, Bettina**
**07751 Jena (DE)**

(74) Vertreter: **Schneiders & Behrendt Bochum Rechts- und Patentanwälte**
**Huestraße 23**
**44787 Bochum (DE)**

(56) Entgegenhaltungen:
US-A1- 2010 142 034

• GUO SHU-WEN ET AL: "Pulse generation and compression using an asymmetrical porous silicon-based Mach-Zehnder interferometer configuration", PRAMANA, INDIAN ACADEMY OF SCIENCES, BANGALORE, IN, Bd. 87, Nr. 6, 3. November 2016 (2016-11-03), Seiten 1-4, XP036115548, ISSN: 0304-4289, DOI: 10.1007/S12043-016-1301-Z [gefunden am 2016-11-03]
• YUCHENG ZHAO ET AL: "Passive Repetition Rate Multiplication in High-Power Figure-of-Eight Fibre Lasers", OPTICAL INTERNET, 2007 AND THE 2007 32ND AUSTRALIAN CONFERENCE ON OPTICAL FIBRE TECHNOLOGY. COIN-ACOFT 2007. JOINT INTERNATIONAL CONFERENCE ON, IEEE, PISCATAWAY, NJ, USA, 24. Juni 2007 (2007-06-24), Seiten 1-3, XP031252036, ISBN: 978-0-9775657-3-3
• KERSE CAN ET AL: "3.5-GHz intra-burst repetition rate ultrafast Yb-doped fiber laser", OPTICS COMMUNICATIONS, ELSEVIER, AMSTERDAM, NL, Bd. 366, 31. Dezember 2015 (2015-12-31), Seiten 404-409, XP029408778, ISSN: 0030-4018, DOI: 10.1016/J.OPTCOM.2015.12.064
• SEIFERT B ET AL: "A fiber Mach-Zehnder interferometer for the unique phase retrieval of ultrafast pulses with a 1 THz gap", APPLIED PHYSICS B ; LASERS AND OPTICS, SPRINGER, BERLIN, DE, Bd. 99, Nr. 3, 26. März 2010 (2010-03-26), Seiten 423-426, XP019844990, ISSN: 1432-0649

- **YONGWOO PARK ET AL: "Optical fiber system for real-time Fourier transformation of nanosecond-long broadband microwave waveforms", MICROWAVE PHOTONICS (MWP), 2010 IEEE TOPICAL MEETING ON, IEEE, PISCATAWAY, NJ, USA, 5. Oktober 2010 (2010-10-05), Seiten 171-174, XP031832388, ISBN: 978-1-4244-7824-8**
- **MIN ET AL: "Repetition rate multiplication in figure-eight fibre laser with 3dB couplers", OPTICS COMMUNICATIONS, ELSEVIER, AMSTERDAM, NL, vol. 277, no. 2, 4 August 2007 (2007-08-04), pages 411-413, XP022183602, ISSN: 0030-4018, DOI: 10.1016/J.OPTCOM.2007.05.050**

## Beschreibung

Die Erfindung betrifft eine optische Komponente zur Erzeugung von Laserpulsen mit zeitlichem Versatz, mit

- einem faseroptischen Aufteilungselement, das einen dem Aufteilungselement über eine Eingangsfaser zugeführten Laserpuls auf wenigstens zwei Faserarme aufteilt, und
- einem faseroptischen Kombinationselement, das die dem Kombinationselement über die wenigstens zwei Faserarme zugeführten Laserpulse in einer Ausgangsfaser in einem Burst überlagert,

wobei die wenigstens zwei Faserarme einen Längenunterschied aufweisen, so dass die Laserpulse durch das faseroptische Kombinationselement in der Ausgangsfaser mit zeitlichem Versatz überlagert werden.

Außerdem betrifft die Erfindung eine Vorrichtung und ein Verfahren zur Erzeugung von Laserpulsen in einem Burstbetrieb.

Kurzpulslaser haben sich in den letzten Jahren als vielfältig einsetzbares Werkzeug in der hochpräzisen Materialbearbeitung etabliert. Dabei zeigen ultrakurze Laserpulse (mit einer Pulsdauer < 10 ps) Vorteile gegenüber längeren Laserpulsen (mit einer Pulsdauer im Bereich ns) aufgrund eines geringeren Wärmeeintrages in das Werkstück (so genannte kalte Ablation). Die Geschwindigkeit der Bearbeitung ist bestimmt durch die Pulsrepetitionsrate des Kurzpulslasers. Um eine kosteneffiziente Bearbeitung zu erlauben, wurden in den letzten Jahren hochrepetierende Lasersysteme entwickelt. Bei gegebener Pulsenergie bedeutet dies eine ebenso gesteigerte mittlere Leistung. Es konnte gezeigt werden, dass bei steigender mittlerer Leistung ein Wärmeeintrag in das Werkstück auch bei kürzesten Pulsdauern (Femtosekundenpulse) und damit verbunden eine Schädigung des Werkstücks und eine Reduktion der Bearbeitungsqualität nicht zu vermeiden sind, da sich die eingetragene Wärme akkumuliert.

Um einen solchen Schädigungseffekt bei hoher mittlerer Leistung des Laserpulszuges zu reduzieren, wurde vorgeschlagen, anstatt eines äquidistanten Pulsabstandes (mit einer typischen Pulsrepetitionsrate im Bereich von 10 kHz bis 10 MHz, entsprechend einem zeitlichen Pulsabstand von 10ms bis 10µs) einen sog. Burstbetrieb zu verwenden. Das bedeutet, dass eine Sequenz aus einer gewissen Anzahl von Laserpulsen mit geringem zeitlichen Abstand (sog. Mikropulsrepetitionsrate) < 10 ns, idealerweise < 200 ps ein Pulspaket (Burst) bilden und weitere Pulspakete in einem größeren zeitlichen Abstand (z.B. demjenigen des ursprünglichen Pulszuges, d.h. mit der sog. Makropulsrate) folgen (wiederum im Bereich ms bis µs).

Begründet ist dieser Ansatz durch die zeitlich begrenzte Ausbreitungsgeschwindigkeit der eingebrachten Wärme in das Werkstück. Ist der Pulsabstand derart gering, dass erwärmtes Material durch den schnell nachfolgenden Puls abgetragen wird, kann der Wärmeeintrag in das Werkstück signifikant reduziert werden, wodurch auch bei höchsten mittleren Leistung exzellente Bearbeitungsergebnisse erwartet werden.

Als Wunschspezifikationen an ein im Burstbetrieb arbeitendes Lasersystem zur hochpräzisen Materialbearbeitung lassen sich daher folgende Parameter ableiten:

- Pulsdauer < 300 fs (oder kürzer);

- Pulsenergie im Bereich 1-10 µJ Pulsenergie (oder mehr);

- Mikropulsrepetitionsrate mindestens 1 GHz, idealerweise > 5GHz;

- Pulsanzahl im Burst > 50 (oder mehr);

- Makropulsrate > 1 kHz (oder mehr);

Die Pulsenergieverteilung im Burst sollte idealerweise flexibel (programmierbar) sein.

Aus dem Stand der Technik ist es bekannt, einen aus Pulsbursts bestehenden Laserpulszug durch Amplitudenmodulation der Strahlung eines hochrepetierenden (modengekoppelten) Ultrakurzpulslasers zu erzeugen. Die Amplitudenmodulation erfolgt zum Beispiel durch einen akusto-optischen Modulator (AOM) oder einen elektro-optischen Modulator (EOM) (vgl. P. Elahi, S. Yilmaz, Y. B. Eldeniz, and F. Ö. Ilday, "Generation of picosecond pulses directly from a 100 W, burstmode, doping-managed Yb-doped fiber amplifier," Opt. Lett. 39, 236-239, 2014, sowie Sven Breitkopf, Arno Klenke, Thomas Gottschall, Hans-Jürgen Otto, Cesar Jauregui, Jens Limpert, and Andreas Tünnermann, "58 mJ burst comprising ultrashort pulses with homogenous energy level from an Yb-doped fiber amplifier," Opt. Lett. 37, 5169-5171, 2012) Herausforderungen dieses Ansatzes ergeben sich hinsichtlich der Erzeugung von Femtosekundenpulsen mit einer Repetitionsrate im Bereich von 1 GHz und darüber. Modengekoppelte Ultrakurzpulslaser bieten typischerweise nur eine Repetitionsrate von 10 MHz bis 250 MHz.

Ein anderer bekannter Ansatz basiert auf der Pulsaufteilung. Diese Methode wird z.B. in Laserverstärkern eingesetzt, um die Pulsspitzenleistung zu reduzieren und ist bekannt als "Divided Pulse Amplification" (DPA). Eine bekannte Methode der Pulsaufteilung beruht auf der Verwendung von doppelbrechenden Kristallen und der Ausnutzung verschiedener Laufzeiten senkrecht aufeinander stehender Polarisationen. Eine Sequenz von Kristallen verschiedener Länge ermöglicht die Aufspaltung eines Einzelpulses in eine Vielzahl von Pulsen. Typischerweise wird die Pulsfolge nach der Verstärkung kohärent zu einem Einzelpuls überlagert (vgl. Shian Zhou, Frank W. Wise, and Dimitre G. Ouzounov, "Divided-pulse amplification of ultrashort pulses," Opt. Lett. 32, 871-873, 2007). Mit diesem Ansatz lässt sich ein sehr kurzer Pulsabstand und damit eine hohe Mikropulsrepetitionsrate erzeugen, allerdings in einem volumenoptischen Aufbau mit Freistrahlpropagation, welcher störanfällig ist.

Schließlich ist es auch bekannt, einen hochrepetierenden Burst faseroptisch durch Verwendung einer Kaskadierung von faseroptischen Strahlteilern zu erzeugen (vgl. A. Haboucha, W. Zhang T. Li, M. Lours, A. N. Luiten, Y. Le Coq, and G. Santarelli, "Optical-fiber pulse rate multiplier for ultralow phase-noise signal generation, Opt. Lett. 36, 2011). Hierbei wird allerdings die Dispersion in den unterschiedlichen Propagationspfaden nicht ausgeglichen, was zu einer für die Anwendung schädlichen Variation der Pulsdauer entlang des Bursts führt.

GUO SHU-WEN ET AL: "Pulse generation and compression using an asymmetrical porous silicon-based Mach-Zehnder interferometer configuration", Pramana Journal of Physics, Bd. 87, Nr. 6, 3. November 2016 (2016-11-03), Seiten 1-4 schlägt die Verwendung eines asymmetrischen Mach-Zehnder Interometers zur Erzeugung von Pulsen mit zeitlichem Versatz vor, wobei Faserkoppler, eine Faserverzögerungsstrecke und ein Wellenleiter aus porösem Siliziuim verwendet werden.

Vor diesem Hintergrund ist es Aufgabe der Erfindung, eine Möglichkeit zur Erzeugung von Laserpulsen im Burstbetrieb mit hoher Qualität basierend auf dem Prinzip der Pulsaufteilung aufzuzeigen, die kompakt und robust und möglichst komplett faseroptisch realisierbar ist. Auf diese Weise soll einfach die Integration in faseroptische Verstärker ermöglicht werden.

Diese Aufgabe löst die Erfindung ausgehend von einer optischen Komponente der eingangs angegebenen Art dadurch, dass die Faserarme durch optische Fasern gebildet sind, die unterschiedliche Dispersion aufweisen.

Als faseroptische Aufteilungs- und Kombinationselemente können handelsübliche optische Fasersplitter Verwendung finden.

Der vorgeschlagene Aufbau ähnelt einem Mach-Zehnder-Interferometer.

Beginnend mit dem faseroptischen Aufteilungselement wird der diesem über die Eingangsfaser zugeführte Laserpuls auf mindestens zwei Faserarme aufgespalten, wobei die Laserpulse in den beiden Faserarmen zeitlich verzögert werden und somit am faseroptischen Kombinationselement nicht interferometrisch überlagern, sondern lediglich zeitlich verzögert in die Ausgangsfaser eingespeist werden, wodurch sich ein aus mindestens zwei (entsprechend der Zahl der Faserarme) Pulsen bestehender Burst ergibt.

Zur Erzielung einer für praktische Anwendungen hinreichenden Mikropulsrepetitionsrate sollte der durch den Längenunterschied der Faserarme erzeugte zeitliche Versatz weniger als 4 ns, vorzugsweise weniger als 1 ns, weiter bevorzugt weniger als 250 ps betragen.

Idealerweise haben alle Pulse des Bursts eine nahezu identische Pulsdauer.

Daher ist es essenziell, dass trotz der Laufzeitunterschiede in beiden Faserarmen, hervorgerufen durch verschiedene Faserlängen, nur minimale Unterschiede in der Dispersion in den beiden Faserarmen auftreten. Dies wird erfindungsgemäß ermöglicht durch den Einsatz von optischen Fasern unterschiedlicher Dispersion in den Faserarmen, so dass die Summen der in den Faserarmen jeweils akkumulierten Phasenterme höherer Ordnung nahezu identisch sind, d.h.

$$\varphi_{i,Arm1}(\omega) \approx \varphi_{i,Arm2}(\omega)$$

für $i \geq 2$.

$\varphi_{i,Arm1}(\omega)$ ist hierbei die spektrale Phase i-ter Ordnung (in Abhängigkeit von der Frequenz $\omega$) für den ersten Faserarm und $\varphi_{i,Arm2}(\omega)$ für den zweiten Faserarm. Je nach spektraler Bandbreite und Pulsdauer funktioniert der vorgeschlagene Ansatz natürlich auch, wenn die Phasenordnungen nur teilweise, beispielsweise nur die 2. Ordnung, kompensiert werden.

Erfindungsgemäß sind die optischen Fasern der Faserarme hinsichtlich Dispersion und Länge in der Weise aufeinander abgestimmt, dass sich die dem Kombinationselement über die Faserarme zugeführten Laserpulse hinsichtlich des durch die jeweilige Dispersion erzeugten Chirps um weniger als 4 fs/nm, vorzugsweise weniger als 1 fs/nm der Laserpulse normiert auf einen Meter Längenunterschied der Faserarme voneinander unterscheiden. Daraus resultiert eine hinreichend gleich lange Pulsdauer der Laserpulse eines Bursts.

In einer möglichen Ausgestaltung kann vorgesehen sein, dass der längere Faserarm wenigstens einen Abschnitt einer optischen Faser mit einer Dispersion aufweist, die im Spektralbereich der Laserpulse geringer ist als die Dispersion der optische Faser des kürzeren Faserarms. Alternativ kann vorgesehen sein, dass der kürzere Faserarm wenigstens einen Abschnitt einer optischen Faser mit einer Dispersion aufweist, die im Spektralbereich der Laserpulse höher ist als die Dispersion der optische Faser des längeren Faserarms. Die Faserarme können aus nur einem Abschnitt einer optischen Faser einer bestimmten Dispersion bestehen. Denkbar ist ebenso, dass die Faserarme jeweils aus in Propagationsrichtung hintereinander angeordneten Abschnitten unterschiedlicher Dispersion zusammengesetzt sind, um die gewünschte Angleichung der in den unterschiedlich langen Faserarmen insgesamt erzeugten spektralen Phasen zu erzielen.

In einer bevorzugten Ausgestaltung kann der längere Faserarm einen Abschnitt einer optischen Faser aufweisen, deren Dispersion weniger als 4 ps/km/nm, vorzugsweise weniger als 2 ps/km/nm, weiter bevorzugt weniger als 1 ps/km/nm im Spektralbereich des Bursts beträgt. In dieser Ausgestaltung kann die Kompensation der Dispersion durch Verwendung eines Abschnitts einer nahezu dispersionsfreien Faser (z.B. in Form einer speziellen mikrostrukturierte Faser) in dem längeren Faserarm realisiert werden. Verwendet werden kann z.B. eine Faser mit einer (betragsmäßigen) Dispersion von < 2 ps/km/nm über eine Bandbreite von 10 nm um 1030 nm Wellenlänge. Für eine Verzögerung von 200 ps (entsprechend 5 GHz Mikropulsrepetitionsrate) wäre ein Längenunterschied der beiden Faserarme von ca. 4 cm erforderlich (unter der Annahme von Quarzglas als Fasermaterial). Bei 10 nm spektraler Bandbreite (ein typischer Wert bei einer Pulsdauer der Laserpulse von 100 fs) und der genannten Dispersion ergibt sich ein Pulsdauerunterschied von weniger als einer 1 fs, was für die eingangs erwähnten Applikationen in der Materialbearbeitung als vernachlässigbar anzusehen ist.

Zur Erzielung eines möglichst robusten Aufbaus der erfindungsgemäßen optischen Komponente sollten die Eingangsfaser, die Ausgangsfaser und/oder die Faserarme durch polarisationserhaltende optische Fasern gebildet sein.

Ein Abschnitt der erwähnten dispersionsfreien (mikrostrukturierten) Fasern in wenigstens einem der Faserarme wird ggf. Spleißverluste hervorrufen, welche zur Folge haben, dass die Amplitude der Laserpulse im Burst nicht konstant ist. Dies lässt sich einfach durch das Einfügen eines identischen Faserabschnitts (allerdings unterschiedlicher Länge) in den jeweils anderen Faserarm oder durch Verwendung eines Aufteilungselementes mit einem von 50:50 abweichenden Aufteilungsverhältnis leicht kompensieren.

Gegenstand der Erfindung ist außerdem eine Vorrichtung zur Erzeugung von Laserpulsen in einem Burstbetrieb, mit einer Pulslichtquelle, die einen Laserpulszug erzeugt, der aus einer Abfolge von einzelnen zeitlich äquidistanten Laserpulsen besteht, und in eine optische Faser einkoppelt, und mit einer seriellen Anordnung zweier oder mehrerer optischer Komponenten der zuvor beschriebenen Art, wobei sich die Längenunterschiede der Faserarme zweier jeweils seriell aufeinander folgender optischer Komponenten voneinander unterscheiden, wobei die erste der optischen Komponenten in der seriellen Anordnung eingangsseitig mit der Pulslichtquelle verbunden ist.

Die erfindungsgemäße Vorrichtung verwendet zur Erhöhung der Anzahl der Laserpulse im Burst die oben beschriebene optische Komponente in einer seriellen Anordnung mehrfach. Dabei müssen sich die Längenunterschiede der Faserarme zweier jeweils seriell aufeinander folgender optischer Komponenten voneinander unterscheiden. Idealerweise unterscheiden sich die Längenunterschiede der Faserarme zweier jeweils seriell aufeinander folgender optischer Komponenten im Wesentlichen um den Faktor zwei voneinander. Dadurch werden Bursts mit zeitlich nahezu äquidistanten Laserpulsen im Burst erzeugt. Zwei Aufteilungen ergeben vier Laserpulse im Burst, drei Aufteilungen ergeben acht Laserpulse, wobei der Längenunterschied der Faserarme in der dritten optischen Komponente der Serienanordnung idealerweise viermal so groß ist wie in der ersten optischen Komponente. Die Sequenz kann beliebig fortgesetzt werden, wobei die entstehenden Verluste einfach durch faseroptische Verstärker kompensiert werden können. Um einen Burst von $2^N$ Laserpulsen zu erzeugen, müssen N Aufteilungen in Serie verwendet werden, und der Längenunterschied der Faserarme in der N-ten optischen Komponente muss $2^{N-1}$-mal größer sein als in der ersten optischen Komponente. Selbst in einer extremen Konfiguration mit einer sehr großen Anzahl (> 50) von Laserpulsen im Burst wäre der Pulsdauerunterschied der Laserpulse für Anwendungen in der Materialbearbeitung tolerabel.

Die erfindungsgemäße optische Komponente kann Bestandteil eines Laserverstärkersystems sein. In einer bevorzugten Ausgestaltung der erfindungsgemäßen Vorrichtung ist entsprechend ein optischer Verstärker vorgesehen, der den aus Bursts bestehenden Laserpulszug verstärkt, wobei sich die serielle Anordnung der optischen Komponenten in Propagationsrichtung des Laserpulszuges vor dem optischen Verstärker befindet. Die Bursterzeugung erfolgt demnach mit Vorteil vor der Verstärkung. Die erfindungsgemäßen optischen Komponenten müssen folglich nur für Laserpulse geringer Leistung ausgelegt sein.

Eine bekannte Technik zur Erzeugung sehr leistungsstarker Laserpulse ist das sog. CPA-Verfahren ("Chirped Pulse Amplification"). Dabei werden die Laserpulse zunächst bei vergleichsweise geringer Pulsleistung erzeugt. Die so erzeugten Laserpulse werden mittels geeigneter dispersiver optischer Elemente (z.B. Gitter) zeitlich gestreckt. Die zeitlich gestreckten Lichtpulse werden in einem optischen Verstärker verstärkt. Schließlich werden die verstärkten Lichtpulse, wiederum mittels geeigneter dispersiver optischer Elemente, rekomprimiert. Das Ergebnis sind für die Materialbearbeitung geeignete, sehr leistungsstarke kurze bis ultrakurze Laserpulse. Durch die zeitliche Streckung wird die Pulsspitzenleistung herabgesetzt. Dadurch wird gewährleistet, dass die optische Verstärkung erfolgen kann, ohne das optisch gepumpte Verstärkermedium zu schädigen und ohne dass nicht-lineare Effekte im optischen Verstärkermedium auftreten. Durch die Rekompression der Lichtpulse werden die einzelnen Lichtpulse zeitlich verkürzt, dabei wächst die Pulsspitzenleistung entsprechend an. Gemäß dem CPA-Konzept weist die erfindungsgemäße Vorrichtung in einer möglichen Ausgestaltung entsprechend einen Pulsstrecker auf, der die Laserpulse des aus Bursts bestehenden Laserpulszuges zeitlich streckt, wobei der optische Verstärker dem Pulsstrecker nachgeschaltet ist, und einen Pulskompressor, der die Laserpulse nach der Verstärkung zeitlich komprimiert. Dabei ist die serielle Anordnung der optischen Komponenten zweckmäßig dem Pulsstrecker in Propagationsrichtung des aus Bursts bestehenden Laserpulszuges nachgeschaltet.

In einer weiteren bevorzugten Ausgestaltung der erfindungsgemäßen Vorrichtung ist ein Amplitudenmodulator vorgesehen, der in Propagationsrichtung des aus Bursts bestehenden Laserpulszuges der seriellen Anordnung der optischen Komponenten nach- und dem optischen Verstärker vorgeschaltet ist. Der Amplitudenmodulator hat z.B. den Zweck, in dem optischen Verstärker auftretende Sättigungseffekte zu kompensieren. Hierzu kann eine Steuereinrichtung vorgesehen sein, die den Amplitudenmodulator ansteuert und geeignet ist, den aus Bursts bestehenden Laserpulszug hinsichtlich der Amplitude der einzelnen Laserpulse zu modulieren. Die Modulation kann dabei so erfolgen, dass die Laserpulse im Burst nach der Verstärkung eine im Wesentlichen konstante Pulsenergie aufweisen.

Bei einer weiter bevorzugten Ausgestaltung der erfindungsgemäßen Vorrichtung ist eine nichtlineare Kompressionsstufe vorgesehen, die eine spektrale Verbreiterung und eine zeitliche Kompression der Laserpulse bewirkt, wobei die nichtlineare Kompressionsstufe in Propagationsrichtung des Bursts der seriellen Anordnung der optischen Komponenten nachgeschaltet ist. Dadurch wird eine weitere Maximierung der Pulsspitzenleistung erzielt.

Gegenstand der Erfindung ist des Weiteren ein Verfahren zur Erzeugung von Laserpulsen in einem Burstbetrieb, gemäß Anspruch 16, mit den Verfahrensschritten:

- Erzeugen eines Laserpulszuges, d.h. einer Abfolge von zeitlich äquidistanten einzelnen Laserpulsen,
- Einkoppeln des Laserpulszuges in eine optische Faser, und
- Umwandeln des Laserpulszuges in einen Abfolge von Pulsbursts, wobei der Laserpulszug eine mit der optischen Faser verbundene serielle Anordnung zweier oder mehrerer optischer Komponenten der oben beschriebenen Art durchläuft, wobei sich die Längenunterschiede der Faserarme zweier jeweils seriell aufeinander folgender optischer Komponenten voneinander unterscheiden.

Ausführungsbeispiele der Erfindung werden im Folgenden anhand der Zeichnungen näher erläutert. Es zeigen:

Figur 1:    schematische Darstellung einer erfindungsgemäßen optischen Komponente zur Erzeugung von Laserpulsen mit zeitlichem Versatz;

Figur 2:    schematische Darstellung einer erfindungsgemäßen Vorrichtung zur Erzeugung von Laserpulsen in einem Burstbetrieb;

Figur 3:    Illustration der Einbindung der erfindungsgemäßen Vorrichtung in einen optischen Verstärker.

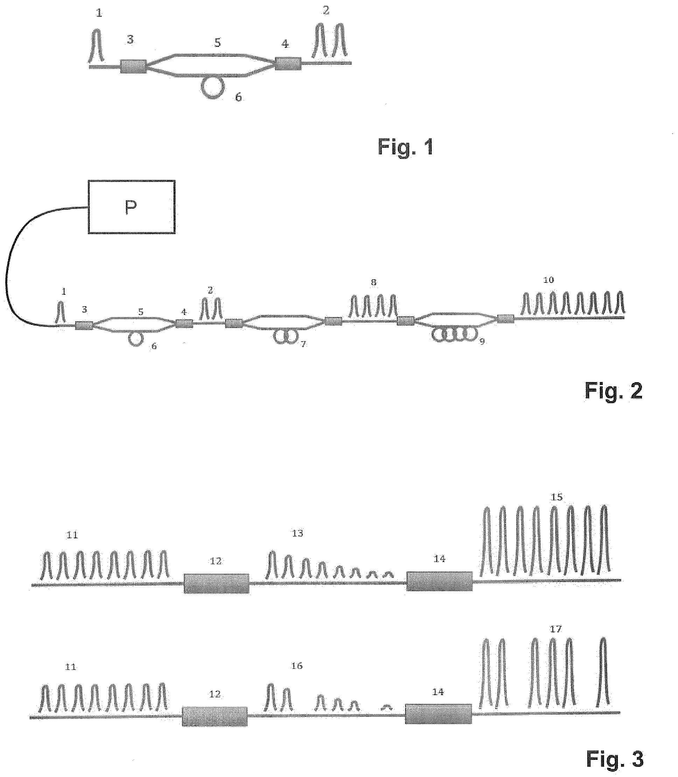

Die Figur 1 zeigt schematisch eine erfindungsgemäße optische Komponente zur Erzeugung von Laserpulsen mit zeitlichem Versatz. Der vorgeschlagene Aufbau ähnelt einem Mach-Zehnder-Interferometer. Beginnend mit einem faseroptischen Aufteilungselement 3 wird der diesem über eine Eingangsfaser zugeführte Laserpuls 1 auf mindestens zwei Faserarme 5, 6 aufgespalten, wobei die Laserpulse in den beiden Faserarmen 5, 6 zeitlich unterschiedlich verzögert werden und somit an einem faseroptischen Kombinationselement 4 nicht zeitlich koinzidieren und interferometrisch überlagern, sondern zeitlich verzögert in die Ausgangsfaser eingespeist werden, wodurch sich ein aus mindestens zwei (entsprechend der Zahl der Faserarme) Laserpulsen bestehender Pulsburst 2 ergibt. Erfindungsgemäß treten trotz der Laufzeitunterschiede in beiden Faserarmen 5, 6, hervorgerufen durch verschiedene Faserlängen, nur minimale Unterschiede in der Dispersion in den beiden Faserarmen 5, 6 auf, so dass die Laserpulse des Pulsbursts 2 eine nahezu identische Pulsdauer aufweisen. Hierzu werden optische Fasern unterschiedlicher Dispersion in den Faserarmen 5, 6 eingesetzt, so dass die Summen der in den Faserarmen jeweils akkumulierten Phasenterme höherer Ordnung nahezu identisch sind. Die optischen Fasern der Faserarme 5, 6 sind hinsichtlich Dispersion und Länge in der Weise aufeinander abgestimmt, dass sich die dem Kombinationselement 4 über die Faserarme 5, 6 zugeführten Laserpulse hinsichtlich des durch die jeweilige Dispersion erzeugten Chirps um weniger als 4 fs/nm (vorzugsweise 1 fs/nm) der Laserpulse, normiert auf einen Meter Längenunterschied der Faserarme, voneinander unterscheiden.

Die Figur 2 zeigt eine erfindungsgemäße Vorrichtung zur Erzeugung von Laserpulsen im Burstbetrieb. Das dargestellte Lasersystem verwendet zur Erhöhung der Anzahl der Laserpulse im Burst die oben beschriebene optische Komponente in einer seriellen Anordnung mehrfach, wie in Figur 2 dargestellt. Die erste der optischen Komponenten in der seriellen Anordnung ist eingangsseitig mit der Pulslichtquelle P, einem kommerziellen (modengekoppelten) Kurzpulslaser, der Femtosekunden-Laserpulse bei einer Repetitionsrate im Bereich von beispielsweise 10 MHz erzeugt. Die Längenunterschiede der Faserarme 6, 7, 9 zweier jeweils seriell aufeinander folgender optischer Komponenten unterscheiden sich voneinander, und zwar um den Faktor zwei. Dadurch werden Bursts mit zeitlich nahezu äquidistanten Laserpulsen im Burst erzeugt. Zwei Aufteilungen ergeben vier Laserpulse im Burst 8, drei Aufteilungen ergeben acht Laserpulse im Burst 10 usw., wobei der Längenunterschied der Faserarme in der dritten optischen Komponente der Serienanordnung viermal so groß ist wie in der ersten optischen Komponente. Die Sequenz kann beliebig fortgesetzt werden.

Die Figur 3 illustriert die erfindungsgemäße Kombination der Bursterzeugung durch Pulsaufteilung mit einem optischen Verstärker. Die serielle Anordnung der Aufteilungskomponenten gemäß Figur 2 wird vor dem optischen Leistungsverstärker 14 platziert. Um auftretende Sättigungseffekte in dem Leistungsverstärker 14 zu kompensieren, ist ein Amplitudenmodulator 12 (z.B. ein AOM, vorzugsweise ein EOM) vorgesehen, der den mit der in Figur 2 dargestellten Vorrichtung erzeugten Burst 11 vorformt, so dass nach der Verstärkung ein Burst 15 mit nahezu identischer Pulsenergie der einzelnen Laserpulse entsteht. Elektrooptische Modulatoren (EOMs) mit einer Bandbreite von einigen GHz ermöglichen eine pulsgenaue Steuerung der Amplituden der Laserpulse. Wie im unteren Diagramm in Figur 3 dargestellt, können einzelne Laserpulse entfernt werden, die dann in den Bursts 16, 17 fehlen, oder es kann die Einhüllende der Bursts 16, 17 beliebig geformt werden.

Die Pulsdauer des Laserverstärkersystems ist im Wesentlichen durch die Verstärkungsbande des verwendeten optisch gepumpten Verstärkungsmediums begrenzt. Verlangen Applikationen eine kürzere Pulsdauer als durch die Verstärkungsbandbreite unterstützt, bietet es sich an, ergänzend eine nichtlineare Pulskompressionsmethode zur Pulsverkürzung einzusetzen. Hierbei durchlaufen die Laserpulse nach der Verstärkung ein nichtlineares Medium (z.B. einen zusätzlichen Wellenleiter, nicht dargestellt), akkumulieren dabei eine nichtlineare Phase, welche zu einer spektralen Verbreiterung der Laserpulse führt, was wiederum eine Pulsverkürzung durch dispersive Elemente erlaubt. Im nichtlinearen Medium bestimmt die Pulsspitzenleistung die spektrale Verbreiterung. Soll nun ein Burstpulszug, wie oben beschrieben, dieser Pulsverkürzungsmethode unterzogen werden, ist es essenziell, dass alle Laserpulse des Pulszuges eine annähernd identische Pulsdauer aufweisen. Die Möglichkeit der Erzeugung eines Burstpulszuges mit annähernd identischer Pulsdauer der Laserpulse durch Kompensation der Dispersionsunterschiede in den Faserarmen der Pulsaufteilung ist dabei ein wichtiger Vorteil der Erfindung.

## Patentansprüche

1. Optische Komponente zur Erzeugung von Laserpulsen mit zeitlichem Versatz, mit

   - einem faseroptischen Aufteilungselement (3), das einen dem Aufteilungselement über eine Eingangsfaser zugeführten Laserpuls (1) auf wenigstens zwei Faserarme (5, 6) aufteilt, und
   - einem faseroptischen Kombinationselement (4), das die dem Kombinationselement über die wenigstens zwei Faserarme (5, 6) zugeführten Laserpulse in einer Ausgangsfaser überlagert,

   wobei die wenigstens zwei Faserarme (5, 6) einen Längenunterschied aufweisen, so dass die Laserpulse durch das faseroptische Kombinationselement (4) in der Ausgangsfaser mit zeitlichem Versatz in einem Burst (2) überlagert werden, wobei die Faserarme (5, 6) durch optische Fasern gebildet sind, die unterschiedliche Dispersion aufweisen,

   **dadurch gekennzeichnet, dass** die optischen Fasern der Faserarme (5, 6) hinsichtlich Dispersion und Länge in der Weise aufeinander abgestimmt sind, dass sich die dem Kombinationselement (4) über die Faserarme (5, 6) zugeführten Laserpulse hinsichtlich des durch die jeweilige Dispersion erzeugten Chirps um weniger als 4 fs, vorzugsweise weniger als 1 fs pro 1 nm spektraler Bandbreite der Laserpulse normiert auf einen Meter Längenunterschied der Faserarme (5, 6) voneinander unterscheiden.

2. Optische Komponente nach Anspruch 1, **dadurch gekennzeichnet, dass** der zeitliche Versatz weniger als 4 ns, vorzugsweise weniger als 1 ns, weiter bevorzugt weniger als 250 ps beträgt.

3. Optische Komponente nach Anspruch 1 oder 2, **dadurch gekennzeichnet, dass** der längere Faserarm (6) wenigstens einen Abschnitt einer optischen Faser mit einer Dispersion aufweist, die im Spektralbereich des Laserpulszuges geringer ist als die Dispersion der optische Faser des kürzeren Faserarms (5).

4. Optische Komponente nach Anspruch 1 oder 2, **dadurch gekennzeichnet, dass** der kürzere Faserarm (5) wenigstens einen Abschnitt einer optischen Faser mit einer Dispersion aufweist, die im Spektralbereich der Laserpulse höher ist als die Dispersion der optische Faser des längeren Faserarms (6).

5. Optische Komponente nach einem der Ansprüche 1 bis 4, **dadurch gekennzeichnet, dass** wenigstens einer der Faserarme (5, 6) einen Abschnitt einer optischen Faser aufweist, deren Dispersion weniger als 4 ps/km/nm, vorzugsweise weniger als 2 ps/km/nm, weiter bevorzugt weniger als 1 ps/km/nm im Spektralbereich der Laserpulse beträgt.

6. Optische Komponente nach einem der Ansprüche 1 bis 5, **dadurch gekennzeichnet, dass** die Eingangsfaser, die Ausgangsfaser und/oder die Faserarme (5, 6) durch polarisationserhaltende optische Fasern gebildet sind.

7. Optische Komponente nach einem der Ansprüche 1 bis 6, **dadurch gekennzeichnet, dass** das faseroptische Aufteilungselement (3) dazu eingerichtet ist, den Laserpuls mit einem von 50:50 abweichenden Aufteilungsverhältnis auf die Faserarme (5, 6) aufzuteilen.

8. Vorrichtung zur Erzeugung von Laserpulsen in einem Burstbetrieb, mit einer Pulslichtquelle (P), die einen Laserpulszug erzeugt, der aus einer Abfolge von zeitlich äquidistanten einzelnen Laserpulsen (1) besteht, und in eine optische Faser einkoppelt, **gekennzeichnet durch** eine serielle Anordnung zweier oder mehrerer optischer Komponenten nach einem der Ansprüche 1 bis 7, wobei sich die Längenunterschiede der Faserarme (5, 6, 7, 9) zweier jeweils seriell aufeinander folgender optischer Komponenten voneinander unterscheiden, wobei die erste der optischen Komponenten in der seriellen Anordnung eingangsseitig mit der Pulslichtquelle (P) verbunden ist.

9. Vorrichtung nach Anspruch 8, **dadurch gekennzeichnet, dass** sich die Längenunterschiede der Faserarme (5, 6, 7, 9) zweier jeweils seriell aufeinander folgender optischer Komponenten im Wesentlichen um den Faktor zwei voneinander unterscheiden.

10. Vorrichtung nach Anspruch 8 oder 9, **gekennzeichnet durch** einen optischen Verstärker (14), der die in einem Burst (13) überlagerten Laserpulse (1) verstärkt, wobei sich die serielle Anordnung der optischen Komponenten in Propagationsrichtung des Bursts (13) vor dem optischen Verstärker (14) befindet.

11. Vorrichtung nach Anspruch 10, **gekennzeichnet durch** einen Pulsstrecker, der die Laserpulse des Bursts (13) zeitlich streckt, wobei der optische Verstärker dem Pulsstrecker nachgeschaltet ist, und einen Pulskompressor, der die Laserpulse nach der Verstärkung zeitlich komprimiert.

12. Vorrichtung nach Anspruch 11, **dadurch gekennzeichnet, dass** die serielle Anordnung der optischen Komponenten dem Pulsstrecker in Propagationsrichtung des Bursts (13) nachgeschaltet ist.

13. Vorrichtung nach einem der Ansprüche 10 bis 12, **gekennzeichnet durch** einen Amplitudenmodulator (12), der in Propagationsrichtung des Laserpulszuges der seriellen Anordnung der optischen Komponenten nach- und dem optischen Verstärker (14) vorgeschaltet ist.

14. Vorrichtung nach Anspruch 13, **gekennzeichnet durch** eine Steuereinrichtung, die den Amplitudenmodulator (12) ansteuert und geeignet ist, den Laserpulszug hinsichtlich der Amplitude der einzelnen Laserpulse zu modulieren.

15. Vorrichtung nach einem der Ansprüche 10 bis 14, **gekennzeichnet durch** eine nichtlineare Kompressionsstufe, die eine spektrale Verbreiterung und eine zeitliche Kompression der Laserpulse bewirkt, wobei die nichtlineare Kompressionsstufe in Propagationsrichtung des Bursts (13) der seriellen Anordnung der optischen Komponenten nachgeschaltet ist.

16. Verfahren zur Erzeugung von Laserpulsen in einem Burstbetrieb, mit den Verfahrensschritten:

- Erzeugen eines Laserpulszuges aus einer Abfolge von zeitlich äquidistanten Laserpulsen (1),
- Einkoppeln des Laserpulszuges in eine optische Faser, und
- Umwandeln des Laserpulszuges in einen Abfolge von Pulsbursts (10), wobei der Laserpulszug eine mit der optischen Faser verbundene serielle Anordnung zweier oder mehrerer optischer Komponenten nach einem der Ansprüche 1 bis 7 durchläuft, wobei sich die Längenunterschiede der Faserarme (5, 6, 7, 9) zweier jeweils seriell aufeinander folgender optischer Komponenten voneinander unterscheiden.

## Claims

1. Optical component for generating laser pulses with time offset, comprising

   - a fiber-optic distribution element (3) which distributes a laser pulse (1) supplied to the distribution element via an input fiber between at least two fiber arms (5, 6), and
   - a fiber-optic combining element (4) which superimposes the laser pulses supplied to the combining element via the at least two fiber arms (5, 6), in an output fiber,
   wherein the at least two fiber arms (5, 6) have a difference in length such that the laser pulses are superimposed, in the output fiber, by the fiber-optic combination element (4) with a time offset in a burst (2), wherein the fiber arms (5, 6) are formed by optical fibers that have different dispersion,
   **characterized in that**
   the optical fibers of the fiber arms (5, 6) are adapted to one another in terms of dispersion and length so that the laser pulses supplied to the combining element (4) via the fiber arms (5, 6) differ from one another in the chirps generated by the respective dispersion by less than 4 fs, preferably less than 1 fs, per 1 nm of spectral bandwidth of the laser pulses normalized to one meter difference in length of the fiber arms (5, 6).

2. Optical component according to claim 1, **characterized in that** the time offset is less than 4 ns, preferably less than 1 ns, more preferably less than 250 ps.

3. Optical component according to claim 1 or 2, **characterized in that** the longer fiber arm (6) comprises at least one section of an optical fiber with a dispersion which, in the spectral range of the laser pulse train, is lower than the dispersion of the optical fiber of the shorter fiber arm (5).

4. Optical component according to claim 1 or 2, **char-**

**acterized in that** the shorter fiber arm (5) comprises at least one section of an optical fiber with a dispersion which, in the spectral range of the laser pulses, is greater than the dispersion of the optical fiber of the longer fiber arm (6).

5. Optical component according to any one of claims 1 to 4, **characterized in that** at least one of the fiber arms (5, 6) has a cross-section of an optical fiber whose dispersion is less than 4 ps/km/nm, preferably less than 2 ps/km/nm, more preferably less than 1 ps/km/nm in the spectral range of laser pulses.

6. Optical component according to any one of claims 1 to 5, **characterized in that** the input fiber, output fiber and/or fiber arms (5, 6) are formed by polarization-maintaining optical fibers.

7. Optical component according to any one of claims 1 to 6, **characterized in that** the fiber-optic distribution element (3) is configured to distribute the laser pulse between the fiber arms (5, 6) at a distribution ratio other than 50:50.

8. Device for generating laser pulses in a burst mode, comprising a pulsed light source (P) which generates a laser pulse train that consists of a sequence of individual laser pulses (1) equidistant in time and is injected into an optical fiber, **characterized by** a serial arrangement composed of two or more optical components according to any one of claims 1 to 7, wherein the differences in length of the fiber arms (5, 6, 7, 9) of two optical components which respectively follow one another serially are different from one another, wherein the first of the optical components in the serial arrangement is connected, on the input side, to the pulsed light source (P).

9. Device according to claim 8, **characterized in that** the differences in the length of the fiber arms (5, 6, 7, 9) of two optical components following one another serially differ essentially by a factor of two.

10. Device according to claim 8 or 9, **characterized by** an optical amplifier (14) which amplifies the laser pulses (1) superimposed in a burst (13), wherein the serial arrangement of optical components is located in front of the optical amplifier (14) in the propagation direction of the burst (13).

11. Device according to claim 10, **characterized by** a pulse stretcher which stretches the laser pulses of the burst (13) in time, wherein the optical amplifier is connected downstream of the pulse stretcher, and a pulse compressor which compresses the laser pulses in time after the amplification.

12. Device according to claim 11, **characterized in that** the serial arrangement of the optical components is connected downstream of the pulse stretcher in the direction of burst propagation (13).

13. Device according to any one of claims 10 to 12, **characterized by** an amplitude modulator (12) connected downstream of the serial arrangement of optical components in the propagation direction of the laser pulse train and upstream of the optical amplifier (14).

14. Device according to claim 13, **characterized by** a control device which controls the amplitude modulator (12) and is capable of modulating the laser pulse train in regards to the amplitude of the individual laser pulses.

15. Device according to any one of claims 10 to 14, **characterized by** a non-linear compression stage which causes a spectral broadening and temporal compression of the laser pulses, wherein the non-linear compression stage is connected downstream of the serial arrangement of optical components in the propagation direction of the burst (13).

16. Method for generating laser pulses in a burst mode, comprising the following method steps:

    - generating a laser pulse train from a sequence of laser pulses equidistant in time (1),
    - injecting the laser pulse train into an optical fiber, and
    - converting the laser pulse train into a sequence of pulse bursts (10), wherein the laser pulse train passes through a serial arrangement, connected to the optical fiber, composed of two or more optical components according to any one of claims 1 to 7, wherein the differences in length of the fiber arms (5, 6, 7, 9) of two optical components which respectively follow one another in series are different from one another.

**Revendications**

1. Composant optique pour la génération d'impulsions laser avec un décalage temporel, avec

    - un élément de répartition à fibres optiques (3) qui répartit une impulsion laser (1) amenée à l'élément de répartition par l'intermédiaire d'une fibre d'entrée entre au moins deux bras de fibre (5, 6), et
    - un élément de combinaison à fibres optiques (4), qui superpose dans une fibre de sortie les impulsions laser amenées à l'élément de combinaison par l'intermédiaire des au moins deux bras de fibre (5, 6),

les au moins deux bras de fibre (5, 6) présentant une différence de longueur, de telle sorte que les impulsions laser sont superposées dans la fibre de sortie par l'élément de combinaison à fibres optiques (4) avec un décalage temporel dans une rafale (2), les bras de fibre (5, 6) étant formés par des fibres optiques qui présentent une dispersion différente, **caractérisé en ce que** les fibres optiques des bras de fibre (5, 6) sont accordées les unes aux autres en termes de dispersion et de longueur de telle sorte que les impulsions laser amenées à l'élément de combinaison (4) par l'intermédiaire des bras de fibre (5, 6) diffèrent l'une de l'autre en ce qui concerne la fluctuation de longueur d'onde générée par la dispersion respective de moins de 4 fs, de préférence de moins de 1 fs par 1 nm de largeur de bande spectrale des impulsions laser normalisée à un mètre de différence de longueur des bras de fibres (5, 6).

2. Composant optique selon la revendication 1, **caractérisé en ce que** le décalage temporel est inférieur à 4 ns, de préférence inférieur à 1 ns, de manière davantage préférée inférieur à 250 ps.

3. Composant optique selon la revendication 1 ou 2, **caractérisé en ce que** le bras de fibre plus long (6) présente au moins une section d'une fibre optique ayant une dispersion qui, dans le domaine spectral du train d'impulsions laser, est inférieure à la dispersion de la fibre optique du bras de fibre plus court (5).

4. Composant optique selon la revendication 1 ou 2, **caractérisé en ce que** le bras de fibre plus court (5) présente au moins une section d'une fibre optique ayant une dispersion qui, dans le domaine spectral des impulsions laser, est supérieure à la dispersion de la fibre optique du bras de fibre plus long (6).

5. Composant optique selon l'une quelconque des revendications 1 à 4, **caractérisé en ce qu'**au moins l'un des bras de fibre (5, 6) présente une section d'une fibre optique dont la dispersion est inférieure à 4 ps/km/nm, de préférence inférieure à 2 ps/km/nm, de manière davantage préférée inférieure à 1 ps/km/nm dans le domaine spectral des impulsions laser.

6. Composant optique selon l'une quelconque des revendications 1 à 5, **caractérisé en ce que** la fibre d'entrée, la fibre de sortie et/ou les bras de fibre (5, 6) sont formés par des fibres optiques à maintien de polarisation.

7. Composant optique selon l'une quelconque des revendications 1 à 6, **caractérisé en ce que** l'élément de répartition à fibres optiques (3) est conçu pour répartir l'impulsion laser entre les bras de fibres (5, 6) selon un rapport de répartition différent de 50:50.

8. Dispositif de génération d'impulsions laser dans un mode rafale, avec une source de lumière pulsée (P) qui génère un train d'impulsions laser constitué d'une séquence d'impulsions laser individuelles (1) équidistantes dans le temps et qui est injecté dans une fibre optique, **caractérisé par** un agencement en série de deux ou plus de deux composants optiques selon l'une quelconque des revendications 1 à 7, les différences de longueur des bras de fibre (5, 6, 7, 9) de deux composants optiques qui se suivent respectivement en série étant différentes les unes des autres, le premier des composants optiques dans l'agencement en série étant relié en entrée à la source de lumière pulsée (P).

9. Dispositif selon la revendication 8, **caractérisé en ce que** les différences de longueur des bras de fibre (5, 6, 7, 9) de deux composants optiques successifs en série s diffèrent essentiellement d'un facteur de deux.

10. Dispositif selon la revendication 8 ou 9, **caractérisé par** un amplificateur optique (14) qui amplifie les impulsions laser (1) superposées dans une rafale (13), l'agencement en série des composants optiques se trouvant avant l'amplificateur optique (14) dans la direction de propagation de la rafale (13).

11. Dispositif selon la revendication 10, **caractérisé par** un étireur d'impulsions qui étire dans le temps les impulsions laser de la rafale (13), l'amplificateur optique étant monté en aval de l'étireur d'impulsions, et par un compresseur d'impulsions qui comprime dans le temps les impulsions laser après l'amplification.

12. Dispositif selon la revendication 11, **caractérisé en ce que** l'agencement en série des composants optiques est monté en aval de l'étireur d'impulsions dans la direction de propagation de la rafale (13).

13. Dispositif selon l'une quelconque des revendications 10 à 12, **caractérisé par** un modulateur d'amplitude (12) monté en aval de l'agencement en série des composants optiques dans la direction de propagation du train d'impulsions laser et en amont de l'amplificateur optique (14).

14. Dispositif selon la revendication 13, **caractérisé par** un appareil de commande qui commande le modulateur d'amplitude (12) et qui est apte à moduler le train d'impulsions laser en ce qui concerne l'amplitude des impulsions laser individuelles.

**15.** Dispositif selon l'une quelconque des revendications 10 à 14, **caractérisé par** un étage de compression non linéaire qui provoque un élargissement spectral et une compression temporelle des impulsions laser, l'étage de compression non linéaire étant monté en aval de l'agencement en série des composants optiques dans la direction de propagation de la rafale (13).

**16.** Procédé de génération d'impulsions laser dans un mode rafale, avec les étapes de procédé suivantes :

- la génération d'un train d'impulsions laser à partir d'une séquence d'impulsions laser équidistantes dans le temps (1),
- l'injection du train d'impulsions laser dans une fibre optique, et
- la conversion du train d'impulsions laser en une séquence de rafales d'impulsions (10), le train d'impulsions laser traversant un agencement en série, relié à la fibre optique, de deux ou plus de deux composants optiques selon l'une quelconque des revendications 1 à 7, les différences de longueur des bras de fibre (5, 6, 7, 9) de deux composants optiques qui se suivent respectivement en série étant différentes les unes des autres.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **P. ELAHI ; S. YILMAZ ; Y. B. ELDENIZ ; F. Ö. IL-DAY.** Generation of picosecond pulses directly from a 100 W, burst-mode, doping-managed Yb-doped fiber amplifier. *Opt. Lett.,* 2014, vol. 39, 236-239
- **SVEN BREITKOPF ; ARNO KLENKE ; THOMAS GOTTSCHALL ; HANS-JÜRGEN OTTO ; CESAR JAUREGUI ; JENS LIMPERT ; ANDREAS TÜNNERMANN.** 58 mJ burst comprising ultrashort pulses with homogenous energy level from an Yb-doped fiber amplifier. *Opt. Lett.,* 2012, vol. 37, 5169-5171

- **SHIAN ZHOU ; FRANK W. WISE ; DIMITRE G. OUZOUNOV.** Divided-pulse amplification of ultrashort pulses. *Opt. Lett.,* 2007, vol. 32, 871-873
- **A. HABOUCHA ; W. ZHANG ; T. LI ; M. LOURS ; A. N. LUITEN ; Y. LE COQ ; G. SANTARELLI.** Optical-fiber pulse rate multiplier for ultralow phase-noise signal generation. *Opt. Lett.,* 2011, 36
- **GUO SHU-WEN et al.** Pulse generation and compression using an asymmetrical porous silicon-based Mach-Zehnder interferometer configuration. *Pramana Journal of Physics,* 03. November 2016, vol. 87 (6), 1-4